# EUROPÄISCHE PATENTSCHRIFT

(11) **EP 2 986 917 B1**
(45) Veröffentlichungstag und Bekanntmachung des Hinweises auf die Patenterteilung: **26.12.2018**
(21) Anmeldenummer: 14716290.3
(22) Anmeldetag: 08.04.2014
(51) Int. Cl.: F24C 7/08, H05B 6/12

(54) **KOCHFELD MIT EINER KOCHZONE UND EINER VERKLEINERTEN SYMBOLDARSTELLUNG IN DER KOCHZONE IN EINER ANZEIGEEINHEIT SOWIE VERFAHREN ZUM BETREIBEN EINES KOCHFELDS**
STOVE TOP HAVING A COOKING ZONE AND A REDUCED SYMBOL DEPICTION IN THE COOKING ZONE IN A DISPLAY UNIT AND METHOD FOR OPERATING A STOVE TOP
TABLE DE CUISSON COMPRENANT UNE ZONE DE CUISSON ET UN SYMBOLE RÉDUIT DANS LA ZONE DE CUISSON DANS UNE UNITÉ D'AFFICHAGE, AINSI QUE PROCÉDÉ SERVANT À FAIRE FONCTIONNER UNE TABLE DE CUISSON

(30) Priorität: 16.04.2013 DE 102013206758
(43) Veröffentlichungstag der Anmeldung: 24.02.2016
(73) Patentinhaber: BSH Hausgeräte GmbH, 81739 München (DE)
(72) Erfinder: ORTMANN, Christoph, 81675 München (DE)
(86) Internationale Anmeldenummer: PCT/EP2014/056984
(87) Internationale Veröffentlichungsnummer: WO 2014/170161

(56) Entgegenhaltungen:
- EP-A1- 2 395 813
- EP-A1- 2 709 422
- EP-A2- 1 418 384
- EP-A2- 2 112 867
- WO-A1-2009/053279
- DE-A1-102004 034 761
- DE-A1-102011 087 217
- DE-U1- 8 913 602
- FR-A1- 2 984 463

## Beschreibung

Die Erfindung betrifft ein Kochfeld mit einer Kochfeldplatte, auf welcher zumindest eine flächenmäßig zusammenhängende Kochzone ausgebildet ist, auf welcher ein Kochgeschirr positionell variabel aufstellbar ist. Das Kochfeld umfasst darüber hinaus eine auf der Kochfeldplatte ausgebildete Anzeigeeinheit zur Anzeige von Informationen über die Position des Kochgeschirrs auf der Kochzone. Des Weiteren betrifft die Erfindung ein Verfahren zum Betreiben eines derartigen Kochfelds.

Aus dem Stand der Technik sind Kochfelder bekannt, die eine Kochzone aufweisen, die flächenmäßig so groß dimensioniert ist, dass Kochgeschirr, wie beispielsweise eine Pfanne oder ein Topf oder dergleichen, in verschiedenen Positionen auf dieser Kochzone aufgestellt werden kann und flächenbeheizt werden kann. Beispielsweise ist dies bei Induktionskochfeldern ausgebildet, die eine Mehrzahl von Induktoren unter der Kochfeldplatte aufweisen und dadurch eine entsprechend große Kochzone gebildet werden kann. Insbesondere derartige Kochfelder umfassen auch eine Topferkennungsvorrichtung, mittels welcher die Position des aufgestellten Kochgeschirrs auf dieser großen Kochzone erkannt wird und dann nur diejenigen Heizeinheiten, insbesondere Induktoren, aktiviert werden, auf denen das Kochgeschirr mit dem Boden auch bereichsweise überdeckend angeordnet ist.

Darüber hinaus ist aus der EP 2 330 355 A1 ein Kochfeld bekannt, bei dem Kochgeschirr positionell variabel auf einer derartigen großen Kochzone aufgestellt werden kann. Angrenzend an die Kochzone ist zum vorderen Rand der Kochfeldplatte hin eine Anzeigeeinheit ausgebildet. Diese Anzeigeeinheit umfasst ein Anzeigefeld, in dem die Kochstufe desjenigen Bereichs, auf dem das Kochgeschirr gerade abgestellt ist, angezeigt wird. Dieses Anzeigefeld kann positionell automatisch verschoben werden, wobei dies abhängig von der jeweiligen Position des Kochgeschirrs auf der Kochzone ist.

Aus der EP 2 112 867 A2 ist ein Verfahren zum Erhitzen eines Behälters auf einer Herdplatte bekannt, deren Heizmittel in einem zweidimensionalen Raster im Kochfeld verteilt sind. Nach einem Abstellen eines Behälters auf dem Kochfeld wird ein Heizbereich abgesucht, der aus einer Gruppe von Heizmitteln besteht, die von dem Behälter abgedeckt sind. Das Kochfeld ist dabei auf einem Tastenfeld visualisiert.

Die EP 2 395 813 A1 beschreibt ein Kochgerät mit einer Anzeigeeinheit, die ausgewiesene Regionen, auf denen ein Behälter steht, anzeigt. Die Anzeigeeinheit kann dabei als LED-Array ausgestaltet sein.

Ein weiteres Kochfeld mit mehreren, frei definierbaren Heizzonen ist aus der WO 2009/053279 A1 bekannt, wobei die Heizzonen auf einem Touchscreen dargestellt sind. Mithilfe des Touchscreens kann eine Heizleistung einer Heizzone eingestellt werden.

Eine derartige Anzeige ist bezüglich der umfassenden Informationsdarstellung eingeschränkt.

Es ist Aufgabe der vorliegenden Erfindung ein Kochfeld und ein Verfahren zu schaffen, mit welchen bzw. bei welchem der Informationsinhalt an einen Nutzer bei einem Aufstellen eines Kochgeschirrs auf derartig großen Kochzonen umfänglicher und intuitiv nachvollziehbar ist.

Diese Aufgabe wird durch ein Kochfeld in ein Verfahren gemäß den unabhängigen Ansprüchen gelöst.

Ein erfindungsgemäßes Kochfeld umfasst eine Kochfeldplatte, auf welcher zumindest eine flächenmäßig zusammenhängende Kochzone ausgebildet ist, welche im Hinblick auf ihre Flächengröße so dimensioniert ist, das Kochgeschirr positionell variabel aufstellbar ist und somit an mehreren verschiedenen Stellen auf dieser Kochzone positioniert werden kann und dennoch der gesamte Boden und somit die gesamte Fläche des Kochgeschirrs bei diesen verschiedenen Positionen vollständig innerhalb der Flächenmaße der Kochzone angeordnet ist. Dies bedeutet, dass die Kochzone flächenmäßig so gestaltet ist, dass auch mehrere Kochgeschirre gleichzeitig und jeweils mit der gesamten Bodenfläche innerhalb der Fläche der Kochzone an verschiedenen Positionen auf der Kochzonen aufstellbar und heizbar sind. Das Kochfeld umfasst darüber hinaus eine auf der Kochfeldplatte ausgebildete Anzeigeeinheit, welche zur Anzeige von Informationen über die Position des Kochgeschirrs auf der Kochzone ausgebildet ist. Ein wesentlicher Gedanke der Erfindung ist darin zu sehen, dass die Anzeigeeinheit ein erstes Anzeigefeld aufweist, in welchem eine Mehrzahl von separaten ortsfesten Anzeigebereichen nebeneinander angeordnet sind, und in Anzeigebereichen jeweils eine verkleinerte ortsfeste Symboldarstellung der gesamten Kochzone angezeigt ist. Jede Symboldarstellung ist durch jeweils eine Beleuchtungsvorrichtung in zumindest mehreren flächig unterschiedlichen und/oder in der Flächengröße unterschiedlichen Teilflächen beleuchtbar. Es ist somit vorgesehen, dass die Kochzone symbolhaft durch mehrere separate ebenfalls jeweils die gesamte Kochzone symbolhaft darstellende Symboldarstellungen darstellbar ist. Eine einer Symboldarstellung zugeordnete Beleuchtungsvorrichtung ermöglicht die optische Anzeige der Position des Kochgeschirrs auf der Kochzone in symbolhafter Anzeige in der jeweiligen Symboldarstellung. Durch eine derartige Ausgestaltung kann einem Nutzer die positionelle Belegung der Kochzone informativ umfänglicher und intuitiv nachvollziehbarer dargestellt werden.

Vorzugsweise ist vorgesehen, dass jede Symboldarstellung durch eine Mehrzahl von geometrisch entsprechend der Fläche der Kochzone angeordneten Lichtquellen der zur Symboldarstellung zugehörigen Beleuchtungsvorrichtung aufgebaut ist. Die Darstellung von Teilflächen, auf denen sich ein Kochgeschirr auf der Kochzone befindet, ist dadurch präziser möglich.

Vorzugsweise ist vorgesehen, dass die Lichtquellen in einer Matrix, insbesondere einer zumindest 5 x 5 - Matrix, angeordnet sind. Da eine derartige symmetrische Matrixanordnung auch der üblicherweise viereckigen Gestaltung der Kochzone entspricht, ist die Anzeige der jeweiligen Teilflächen, auf denen sich Kochgeschirr befindet, symbolhaft nochmals präzisiert und eine optisch angezeigte Information für den Nutzer noch mal genauer und leichter nachvollziehbar.

Vorzugsweise sind die Lichtquellen Leuchtdioden. Dadurch ist die Beleuchtungsvorrichtung sehr kompakt aufbaubar und eine energieeffiziente Betriebsweise möglich, was gerade bei einer Vielzahl von entsprechenden Lichtquellen vorteilhaft ist.

Insbesondere ist vorgesehen, dass sich das erste Anzeigefeld über die gesamte Breite der Kochzone erstreckt. Dadurch wird gerade bei sehr großen Kochzonen, die sich über zumindest 90 % der gesamten Breite der Kochfeldplatte erstrecken, auch eine Anzeige der symbolhaften Position an einer Symboldarstellung ermöglicht, die sehr benachbart zu dem tatsächlichen Teilflächenbereich der Kochzone ist, auf dem Kochgeschirr abgestellt ist.

Vorzugsweise ist vorgesehen, dass zumindest vier, insbesondere zumindest fünf, Symboldarstellungen in einer Reihe, insbesondere äquidistant, nebeneinander angeordnet sind. Die oben genannten Vorteile werden dadurch nochmals bekräftigt und darüber hinaus der Platzbedarf in Tiefenrichtung der Kochfeldplatte für die Symboldarstellungen minimiert.

Vorzugsweise ist vorgesehen, dass neben einer Symboldarstellung ein Wertanzeigefeld angeordnet ist, welches zur Wertanzeige für die Kochstufe der von einem Kochgeschirr belegten Teilfläche der Kochzonen ausgebildet ist. Vorzugsweise ist vorgesehen, dass dieses Wertanzeigefeld seitlich an eine Symboldarstellung angrenzend angeordnet ist. Die Zuordnung ist dadurch auch leicht erkennbar und die Informationsdichte mit einem einzigen Blick für einen Nutzer sehr umfänglich. Neben der genauen positionellen Anordnung eines Kochgeschirrs auf der Kochzone, das über die zugehörige Symboldarstellung erkannt werden kann, wird dann auch durch die unmittelbare benachbarte Anordnung des Wertanzeigefelds die zugehörige Kochstufe erkannt.

Es ist vorgesehen, dass die Kochzone in Belegungsspaltenflächen aufgeteilt ist und jede Symboldarstellung zur aktiven optischen Belegungsanzeige eine Belegungsspaltenfläche mit einem Kochgeschirr mit der in Tiefenrichtung der Kochfeldplatte in Verlängerung der Symboldarstellung folgenden Belegungsspaltenfläche korreliert ist. Eine unmittelbare Zuordnung mit minimalem Abstand zwischen der tatsächlichen Kochzone beziehungsweise der Teilfläche und der jeweiligen Symboldarstellung ist dadurch erreicht.

Vorzugsweise ist vorgesehen, dass das Kochfeld eine Steuereinheit aufweist, die dazu ausgebildet ist, abhängig von einer Erkennung zumindest eines Kochgeschirrs auf der Kochzone die der örtlich auf der Kochzone und größenmäßig dem zumindest einen Kochgeschirr entsprechende Teilfläche der Symboldarstellung optisch durch Aktivierung der der Symboldarstellung funktionell zugeordneten Beleuchtungsvorrichtung anzuzeigen.

Insbesondere ist vorgesehen, dass eine Steuereinheit des Kochfelds dazu ausgebildet ist, eine positionelle Veränderung eines Kochgeschirrs auf der Kochzone zu erfassen und abhängig von der Art der positionellen Änderung die Anzeige der Position darzulegen.

Vorzugsweise ist die Steuereinheit dazu ausgebildet, eine positionelle Veränderung eines Kochgeschirrs auf der Kochzone zu erfassen und abhängig von der Art der positionellen Änderung die Anzeige der Position von einer Symboldarstellung auf eine andere Symboldarstellung zu wechseln und/oder eine Änderung der Position des Kochgeschirrs auf der Kochzone in einer einzigen Symboldarstellung anzuzeigen. Diese Alternativen sind dahingehend zu verstehen, dass abhängig von der Distanz und der Richtung der positionellen Änderung des Kochgeschirrs auf der Kochzone entsprechende Übergaben der positionellen Änderung bezüglich der Anzeige von einer Symboldarstellung auf die nächste erfolgt oder eine positionelle Änderung auf der Kochzone erfolgt ist, bei der ein derartiger Anzeigewechsel zwischen den Symboldarstellungen nicht erforderlich ist, sondern diese Positionsänderung noch im Rahmen einer zugeordneten Belegungsspaltenfläche ist, die noch mit einer Symboldarstellung korreliert ist.

Vorzugsweise ist vorgesehen, dass eine Steuereinheit ausgebildet ist, mit welcher nur diejenigen Symboldarstellungen zur optischen Anzeige aktivierbar ist, deren zugeordnete Belegungsspaltenflächen der Kochzone mit einem Kochgeschirr belegt sind. Durch eine derartige Aktivierung und Deaktivierung kann eine Informationsüberflutung eines Nutzers verhindert werden und darüber hinaus die Aufmerksamkeit auf die tatsächlich wesentlichen Informationen von aktivierten Symboldarstellungen gelenkt werden. Das Auftreten von Fehlinterpretationen durch einen Nutzer von optischen Anzeigen kann dadurch vermindert werden.

Insbesondere ist vorgesehen, dass nach der Aktivierung einer Symboldarstellung diese für ein vorgebbares Zeitintervall aktiv bleibt, in welchem eine Einstellung der Kochstufe durch einen Nutzer vorgenommen werden kann. Erfolgt innerhalb dieses Zeitintervalls keinerlei derartige Betätigung, wird die Symboldarstellung automatisch wieder deaktiviert. Auch dadurch kann entsprechend den Sicherheitsanforderungen Genüge getan werden und darüber hinaus für die Fehlinterpretationen über optische Anzeigen reduziert werden.

Vorzugsweise ist vorgesehen, dass die Anzeigeeinheit ein zweites Anzeigefeld aufweist, welches zur Auswahl einer Kochstufe eines durch ein Kochgeschirr belegten Kochzonenteilfläche ausgebildet ist. Vorzugsweise ist dieses zweite Anzeigefeld in ein berührsensitives Bedienfeld integriert, so dass ein Nutzer durch Berühren dieses Bedienfelds eine Auswahl des gewünschten Kochstufenwerts vornehmen kann, der dann in dem Wertanzeigefeld der Symboldarstellung angezeigt wird.

Vorzugsweise ist das zweite Anzeigefeld als Streifen ausgebildet, der parallel zu demjenigen streifenförmigen Flächenbereich angeordnet ist, in dem die Symboldarstellungen in einer Reihe ausgebildet sind.

Vorzugsweise ist vorgesehen, dass das zweite Anzeigefeld zusätzlich oder anstatt dazu so positioniert ist, dass das erste Anzeigefeld die Tiefenrichtung der Kochfeldplatte betrachtet zwischen dem zweiten Anzeigefeld und der Kochzone ausgebildet ist. Dies ist dahingehend vorteilhaft, dass beim Auswählen einer Kochstufe und somit einem Berühren des zweiten Anzeigefelds mit einem Finger oder einem anderen Gegenstand die Symboldarstellungen nicht überdeckt werden und somit keine Sichtbeeinträchtigung auf die Symboldarstellungen bei einer Auswahl einer Kochstufe auftreten.

Vorzugsweise ist vorgesehen, dass sich das zweite Anzeigefeld mit einem kleinsten auswählbaren Kochstufenwert in Tiefenrichtung neben einer in der Reihe ersten Symboldarstellung befindet. Zusätzlich oder anstatt dazu kann vorgesehen sein, dass das zweite Anzeigefeld mit einem größten auswählbaren Kochstufenwert in Tiefenrichtung neben einer in der Reihe letzten Symboldarstellung angeordnet ist. Die Kochstufenwerte, die zur Auswahl symbolhaft auf dem zweiten Anzeigefeld angezeigt und dargestellt sind, erstrecken sich somit über die im Wesentlichen gleiche Breite wie die Anzahl der Symboldarstellungen. Eine verbesserte Nutzerfreundlichkeit und übersichtlichere Informationspräsentation ist dadurch erreicht.

Insbesondere wird vorgesehen, dass abhängig von einer Erkennung zumindest eines Kochgeschirrs auf der Kochzone die der örtlich auf der Kochzone und größenmäßig dem zumindest einem Kochgeschirr entsprechende Teilfläche der Symboldarstellung optisch durch Aktivierung der der Symboldarstellung funktionell zugeordneten Beleuchtungsvorrichtung angezeigt wird.

Vorzugsweise wird vorgesehen, dass eine positionelle Veränderung eines Kochgeschirrs auf der Kochzone erfasst wird und abhängig von der Art der positionellen Änderung die Anzeige der Position von einer Symboldarstellung auf eine andere wechselt und/oder die Änderung der Position in einer einzigen Symboldarstellung angezeigt wird.

Das Kochfeld umfasst vorzugsweise auch eine Topferkennungsvorrichtung, mit welcher die örtliche und/oder größenmäßige Belegung einer Fläche der gesamten Kochzone durch ein Kochgeschirr erfasst werden kann.

Des Weiteren betrifft die Erfindung ein Verfahren zum Betreiben eines Kochfelds, mit einer Kochfeldplatte, auf welcher zumindest eine flächenmäßig zusammenhängende Kochzone ausgebildet wird. Auf dieser Kochzone kann Kochgeschirr positionell variabel aufgestellt werden, wobei auf einer auf der Kochfeldplatte ausgebildeten Anzeigeeinheit Informationen über die Position des Kochgeschirrs auf der Kochzone angezeigt werden. In einem ersten Anzeigefeld der Anzeigeeinheit wird eine Mehrzahl von separaten Anzeigebereichen nebeneinander angeordnet und in Anzeigebereichen wird jeweils eine verkleinerte Symboldarstellung der gesamten Kochzone angezeigt. Jede Symboldarstellung kann durch jeweils eine Beleuchtungsvorrichtung in zumindest mehreren flächig unterschiedlichen und/oder in der Flächengröße unterschiedlichen Teilflächen der Symboldarstellung beleuchtet werden. Bei dem erfindungsgemäßen Verfahren ist vorgesehen, dass die Kochzone in Belegungsspaltenflächen aufgeteilt wird und jede Symboldarstellung zur aktiven optischen Belegungsanzeige einer Belegungsspaltenfläche mit einem Kochgeschirr mit der in Tiefenrichtung der Kochfeldplatte betrachtet in Verlängerung der Symboldarstellung folgenden Belegungsspaltenfläche korreliert wird und/oder eine positionelle Veränderung eines Kochgeschirrs auf der Kochzone erfasst wird und abhängig von der Art der positionellen Änderung, insbesondere der Richtung der Positionsänderung, die Anzeige der Position von einer Symboldarstellung auf eine andere wechselt.

Weitere vorteilhafte Ausgestaltungen des erfindungsgemäßen Kochfelds sind als vorteilhafte Ausführungen des erfindungsgemäßen Verfahrens anzusehen.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert. Es zeigen:
Fig. 1 eine Draufsicht auf ein Ausführungsbeispiel eines erfindungsgemäßen Kochfelds;
Fig. 2 eine Draufsicht auf ein Ausführungsbeispiel eines erfindungsgemäßen Kochfelds gemäß Fig. 1 mit einem an spezifischer Position auf der Kochzone aufgestellten Kochgeschirr;
Fig. 3 eine Darstellung der Ausführung in Fig. 2, bei dem das aufgestellte Kochgeschirr in eine erste Richtung positionell verschoben wird; und
Fig. 4 eine Draufsicht auf die Darstellung gemäß Fig. 2, bei der das Kochgeschirr positionell in eine zweite Richtung verschoben wird.

In den Figuren werden gleiche oder funktionsgleiche Elemente mit den gleichen Bezugszeichen versehen.

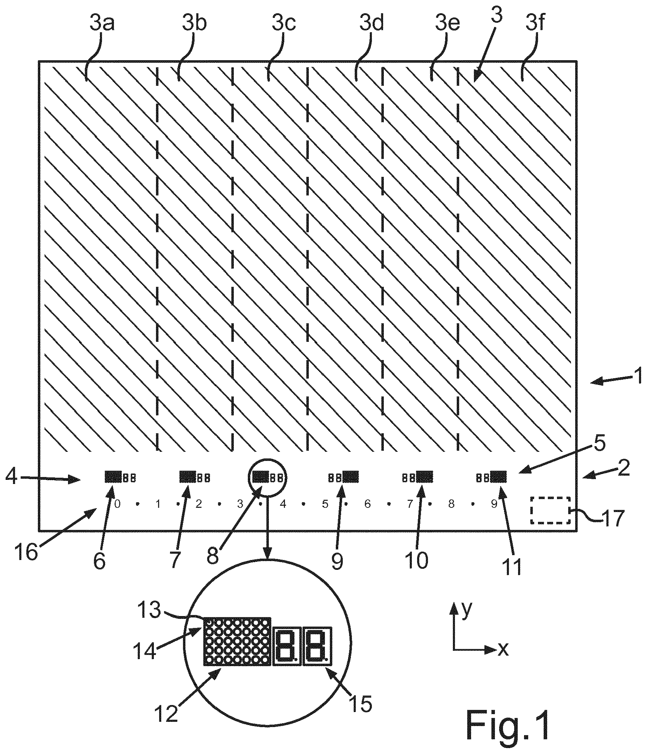

In Fig. 1 ist ein Kochfeld 1 gezeigt, welches eine Kochfeldplatte 2, die beispielsweise aus Glas oder Glaskeramik ausgebildet sein kann, aufweist. Das Kochfeld 1 kann als Induktionskochfeld ausgebildet sein. Unter der Kochfeldplatte 2 sind eine Mehrzahl von Heizeinheiten angeordnet, die beispielsweise Strahlungsheizkörper oder Induktoren sein können.

Sie sind positionell so angeordnet, dass sie eine Kochzone 3, auf der auf einer Oberseite der Kochfeldplatte 2 Kochgeschirr aufgestellt werden kann, beiheizen können beziehungsweise über diese Fläche Energie in das Kochgeschirr zur entsprechenden Aufheizung abgeben können.

Wie aus der Darstellung in Fig. 1 zu erkennen ist, erstreckt sich die Flächenkennzeichnung der gestreift dargestellten Kochzone 3 zumindest über 80 %, vorzugsweise zumindest über 90 %, vorzugsweise über zumindest 95 % der Breite (Erstreckung in x-Richtung) der Kochfeldplatte 2. Darüber hinaus ist auch vorgesehen, dass sich diese eine flächenmäßig zusammenhängende Kochzone 3 über zumindest 60 %, vorzugsweise über zumindest 70 % der Tiefe (Erstreckung in y-Richtung) der Kochfeldpatte 2 erstreckt. Die Kochzone 3 ist flächenmäßig daher so groß, dass Kochgeschirr an vielen unterschiedlichen Positionen variabel auf dieser Kochzone 3 aufgestellt werden kann und entsprechend individuell beheizt werden kann.

Das Kochfeld 1 umfasst dazu auch eine Topferkennungseinrichtung, mittels welcher diejenige Teilfläche der Kochzone 3 erkannt werden kann, die durch einen Boden eines Kochgeschirrs belegt ist. Gerade bei einem Induktionskochfeld können dann diejenigen Induktoren aktiviert werden, die zumindest über einen bestimmten Flächenbereich durch den Boden des Kochgeschirrs belegt sind.

Das Kochfeld 1 umfasst darüber hinaus eine Anzeigeeinheit 4, die in Tiefenrichtung betrachtet vor der Kochzone 3 ausgebildet ist. Die Anzeigeeinheit 4 umfasst ein erstes Anzeigefeld 5, in dem im Ausführungsbeispiel sechs Anzeigebereiche 6, 7, 8, 9, 10 und 11 in einer Reihe nebeneinander und beabstandet zueinander angeordnet sind. Wie anhand des vergrößert dargestellten Anzeigebereichs 8 zu erkennen ist, umfasst dieser eine ortsfeste Symboldarstellung 12, die die gesamte Kochzone 3 geometrisch verkleinert und als Symbol anzeigt. Diese Symboldarstellung 12 ist durch eine Mehrzahl von Lichtquellen 13, von denen der Übersichtlichkeit dienend nur eine mit dem Bezugszeichen versehen wird, aufgebaut, die in einer Matrix zueinander angeordnet sind. Die Lichtquellen 13 sind Leuchtdioden und einer Beleuchtungsvorrichtung 14 zugehörig, die wiederum der Symboldarstellung 12 zugeordnet ist und lediglich zur Beleuchtung der Symboldarstellung 12 ausgebildet und angeordnet ist. Seitlich neben der Symboldarstellung 12 ist ein Wertanzeigefeld 15 ausgebildet, welches zur Anzeige einer eingestellten Kochstufe eines von einem Kochgeschirr belegten Bereichs und somit einer Kochzonenteilfläche und der darunter angeordneten Heizeinheiten eingestellt ist.

Die Anzeigebereiche 6 bis 11 sind identisch jeweils mit einer eigenen separaten ortsfesten Symboldarstellung 12 und einem jeweils seitlich dazu positionierten eigenen ortsfesten Wertanzeigefeld 15 ausgebildet, so dass die Darstellung zum Anzeigebereich 8 auch für die weiteren Anzeigebereiche gilt.

Darüber hinaus ist auf der Kochfeldplatte 2 ein zweites Anzeigefeld 16 vorgesehen, welches ebenfalls als Streifen gebildet ist und über welchen die Kochstufe wertmäßig einstellbar ist. Ebenfalls sind symbolhafte Ziffern auf der Kochfeldplatte 2 angedeutet, durch welche ein Nutzer durch Berühren der jeweiligen Bereiche den gewünschten Kochstellenwert auswählen und einstellen kann. Insbesondere ist die Anzeigeeinheit im Rahmen des zweiten Anzeigefelds 16 integriert in ein berührsensitives Bedienfeld.

Es ist vorgesehen, dass das zweite Anzeigefeld 16 quer zum frontseitigen Rand der Kochfeldplatte 2 angeordnet ist und somit das erste Anzeigefeld 5 zwischen dem zweiten Anzeigefeld 16 und der Kochzone 3 sich erstreckt.

Darüber hinaus ist vorgesehen, dass die in der Reihe eine erste Symboldarstellung 12 bzw. der erste Anzeigebereich 6 in Tiefenrichtung betrachtet vor dem kleinsten Wert der Kochstufe angeordnet ist, und der in der Reihe letzte Anzeigebereich 11 in Tiefenrichtung betrachtet praktisch vor dem größtmöglichen Einstellwert angeordnet ist. Dadurch ist vorgesehen, dass sich die Breite der Reihe der Anzeigebereiche 6 bis 11 entsprechend der Breite der Reihe der angezeigten möglichen einstellbaren Werte der Kochstufe erstreckten.

Das Kochfeld 1 umfasst darüber hinaus eine lediglich symbolhaft dargestellte Steuereinheit 17, mit welcher die genannte Topferkennungseinrichtung steuerbar ist. Darüber hinaus sind damit auch die Anzeigeeinheit 4 und die Bedienvorrichtung steuerbar.

Es ist darüber hinaus vorgesehen, dass die Fläche der Kochzone 3 in Belegungsspaltenflächen unterteilt ist, wobei im vorliegenden Fall die Anzahl der Belegungsspaltenflächen 3a, 3b, 3c, 3d, 3e und 3f der Anzahl der Anzeigebereiche 6 bis 11 entspricht. Darüber hinaus ist vorgesehen, dass sich die Breite der Belegungsspaltenflächen 3a bis 3f so bemisst, dass ein Rand quasi immer zwischen zwei Anzeigebereichen 6 bis 11 und somit auch zwischen jeweils zwei benachbarten Symboldarstellungen 12 mit zugehörigen Wertanzeigefeldern 15 angeordnet ist. Damit ist in Tiefenrichtung betrachtet jeweils ein Anzeigebereich 6 bis 11 in Verlängerung der zugehörigen Belegungspaltenfläche 3a bis 3f positioniert. Dies bedeutet, dass der Anzeigebereich 6 mit der Belegungsspaltenfläche 3a korreliert ist, der Anzeigebereich 7 mit der Belegungsspaltenfläche 3b korreliert ist usw.

Jede Symboldarstellung 12 der Kochzone 3 ist durch jeweils eine Beleuchtungsvorrichtung 14 zumindest in mehreren flächig unterschiedlichen und/oder in der Flächengröße unterschiedlichen Teilflächen beleuchtbar, wobei dies abhängig davon erfolgt, auf welcher Kochzonenteilfläche ein Kochgeschirr abgestellt ist.

Die Steuereinheit 17 ist dazu ausgebildet, abhängig von einer Erkennung zumindest eines Kochgeschirrs auf der Kochzone 3, die der örtlich auf der Kochzone 3 und größenmäßig den zumindest einem Kochgeschirr entsprechende Teilfläche der Symboldarstellung 12 optisch durch Aktivierung der der Symboldarstellung 12 funktionell zugeordneten Beleuchtungsvorrichtung anzuzeigen.

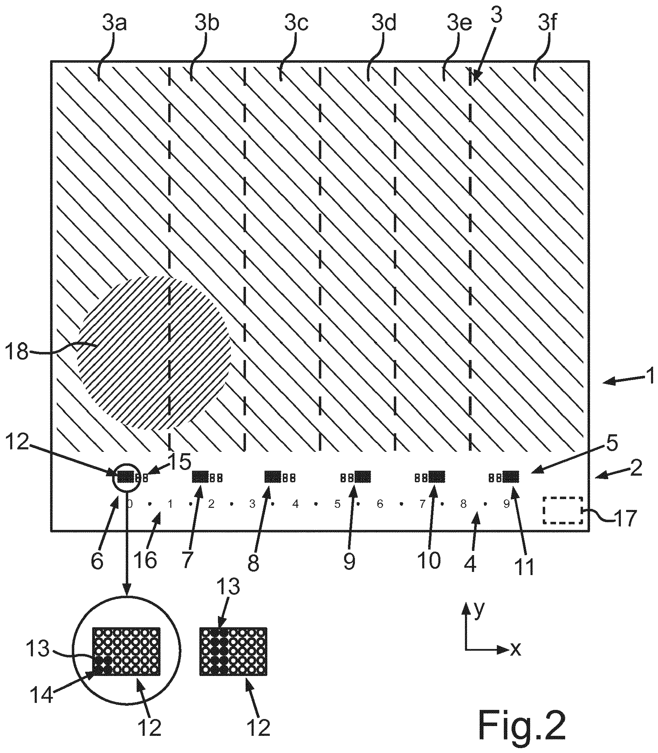

So ist in dem Zusammenhang gemäß der Darstellung in Fig. 2 ein Kochgeschirr 18 in einem linken vorderen Bereich der Fläche der Kochzone 3 aufgestellt. Durch die Steuereinheit 17 wird dies mittels der von der Topferkennungseinrichtung erhaltenen Informationen erkannt und ausgewertet. Dabei wird auch erkannt, dass sich der Boden des Kochgeschirrs 18 mit einem größeren Flächenbereich innerhalb der Belegungsspaltenfläche 3a befindet, sodass für die symbolhafte Darstellung der Position des Kochgeschirrs 18 auf der Kochzone 3 das der Belegungsspaltenfläche 3a zugeordnete Anzeigefeld 6 durch die Steuereinheit 17 aktiviert wird und darüber hinaus diejenigen Lichtquellen 13 der Beleuchtungsvorrichtung 14 zur Beleuchtung der Symboldarstellung 12 des Anzeigebereichs 6 aktiviert werden und leuchten, die links vorne angeordnet sind. Die Anzahl der positionell aktivierten Lichtquellen 13 ist dabei abhängig von der jeweiligen Bodenfläche des Kochgeschirrs 18, sodass bei größeren Kochgeschirren mehr Lichtquellen positionell aktiviert werden, als bei kleineren Kochgeschirren.

Darüber hinaus ist auch vorgesehen, dass bei der Ausgestaltung gemäß Fig. 2 die weiteren Anzeigebereiche 7 bis 11 deaktiviert sind, sodass hier keinerlei optische Information dargestellt ist und somit der Nutzer nicht verwirrt wird und sehr ortsfokussiert Informationen der Position des Kochgeschirrs 18 am Anzeigebereich 6 wahrnehmen kann.

Beispielhaft sind in Fig. 2 wegen der vergrößerten Darstellung der Symboldarstellung 12 weitere Beispiele gezeigt, bei der ein sehr großes längliches Kochgeschirr auf der Kochzone 3 aufgestellt ist, sodass die zweite und dritte Reihe von links betrachtet der Lichtquellen 13 leuchten und somit die Größe und Position des aufgestellten Kochgeschirrs symbolhaft anzeigen.

Darüber hinaus ist die Topferkennungseinrichtung und damit auch die zur Auswertung der erhaltenen Informationen vorgesehene Steuereinheit 17 dazu ausgebildet, eine positionelle Veränderung eines Kochgeschirrs 18 auf der Kochzone 3 zu erfassen und abhängig von der Art der positionellen Änderung die Anzeige der Position an einer Symboldarstellung 12 auf eine andere Symboldarstellung eines anderen Anzeigebereichs zu wechseln und/oder die Änderung der Position in einer einzigen Symboldarstellung anzuzeigen und dazu andere Lichtquellen zu aktivieren.

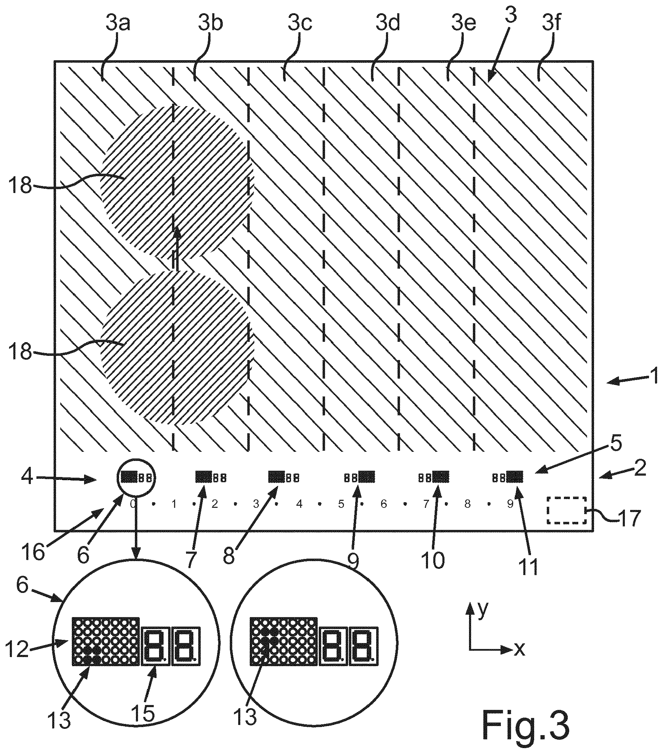

So ist in dem Zusammenhang in Fig. 3 eine Situation gezeigt, bei der ausgehend von der Darstellung in Fig. 2 das Kochgeschirr 18 lediglich nur in eine Richtung verschoben wird, bei der sich weiterhin der größere Flächenteil des Bodens des Kochgeschirrs 18 in der Belegungsspaltenfläche 3a befindet. In dem Zusammenhang erfolgt die optische Anzeige der Position des Kochgeschirrs weiterhin in der Symboldarstellung 12 des Anzeigefelds 6 und es findet kein Wechsel der optischen Anzeige auf eine Symboldarstellung 12 eines der Anzeigefelder 7 bis 11 statt. Wie in der vergrößerten Darstellung in Fig. 3 des Anzeigefelds 6 zu erkennen ist, werden die Lichtquellen 13 der ursprünglichen Position deaktiviert und andere Lichtquellen 13 der Matrixanordnung aktiviert, wodurch die positionelle Änderung des Kochgeschirrs auch symbolhaft angezeigt ist.

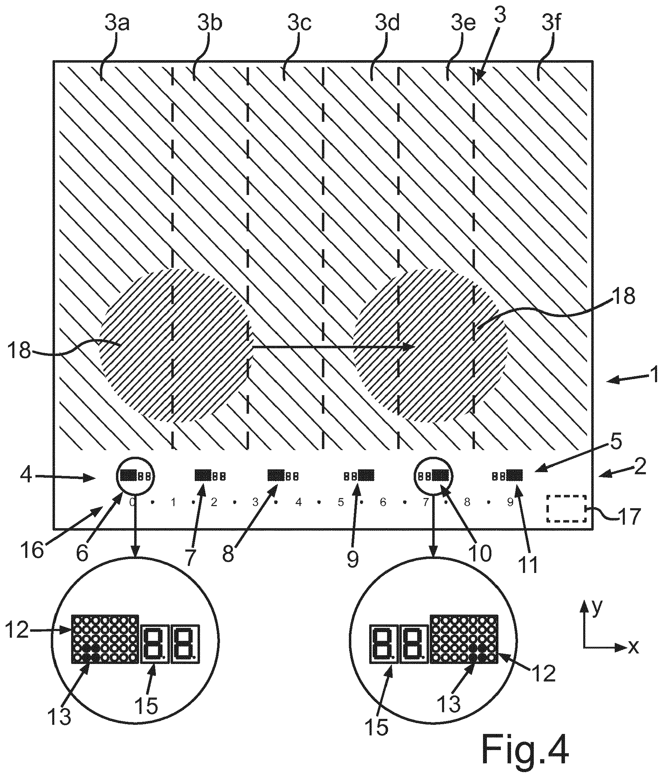

Bei der Darstellung in Fig. 4 hingegen wird ausgehend von der ursprünglichen Position des Kochgeschirrs 18 eine Verschiebung in eine zu Fig. 3 unterschiedliche Richtung durchgeführt und in dem Zusammenhang das Kochgeschirr 18 in Breitenrichtung verschoben. Dabei erfolgt ein Wechsel der optischen Anzeige von der Symboldarstellung 12 des Anzeigebereichs 6 auf die Symboldarstellung 12 des Anzeigebereichs 10, wobei dies auch wieder davon abhängt, mit welchem Flächenteil das Kochgeschirr 18 in welcher Belegungsspaltenfläche 3a bis 3f angeordnet ist. Darüber hinaus wird neben dem Wechsel der optischen Anzeige von dem Anzeigebereich 6 zum Anzeigebereich 10 auch die positionelle Änderung durch unterschiedliche Aufleuchtung von Lichtquellen 13 der Symboldarstellung 12 des Anzeigefelds 10 angezeigt.

Die Steuereinheit 17 ist vorzugsweise auch dazu ausgebildet, dass bei einer Aktivierung eines Anzeigebereichs 6 dieser nur für ein vorgegebenes Zeitintervall aktiv bleibt, innerhalb dem dann auch die Kochstufe eingestellt werden kann. Erfolgt innerhalb dieses Zeitintervalls keinerlei Betätigung bzw. Bedienung, so wird vorzugsweise dann dieser Anzeigebereich 6 wieder deaktiviert.

### Bezugszeichenliste

- 1: Kochfeld
- 2: Kochfeldplatte
- 3: Kochzone
- 3a, 3b, 3c, 3d, 3e und 3f: Belegungsspaltenflächen
- 4: Anzeigeeinheit
- 5: Anzeigefeld
- 6, 7, 8, 9, 10,11: Anzeigebereiche
- 12: Symboldarstellung
- 13: Lichtquellen
- 14: Beleuchtungsvorrichtung
- 15: Wertanzeigefeld
- 16: Anzeigefeld
- 17: Steuereinheit
- 18: Kochgeschirr

## Patentansprüche

1. Kochfeld (1) mit einer Kochfeldplatte (2), auf welcher zumindest eine flächenmäßig zusammenhängende Kochzone (3) ausgebildet ist, auf welcher Kochgeschirr (18) positionell variabel aufstellbar ist, und einer auf der Kochfeldplatte (2) ausgebildeten Anzeigeeinheit (4) zur Anzeige von Informationen über die Position des Kochgeschirrs (18) auf der Kochzone (3), wobei die Anzeigeeinheit (4) ein erstes Anzeigefeld (5) aufweist, in welchem eine Mehrzahl von separaten Anzeigebereichen (6 bis 11) ortsfest nebeneinander angeordnet sind, und in Anzeigebereichen (6 bis 11) jeweils eine verkleinerte Symboldarstellung (12) der gesamten Kochzone (3) angezeigt ist, **dadurch gekennzeichnet, dass** jede Symboldarstellung (12) durch jeweils eine Beleuchtungsvorrichtung (14) in zumindest mehreren flächig unterschiedlichen und/oder in der Flächengröße unterschiedlichen Teilflächen beleuchtbar ist, und dass die Kochzone (3) in Belegungsspaltenflächen (3a bis 3f) aufgeteilt ist und jede Symboldarstellung (12) zur aktiven optischen Belegungsanzeige einer Belegungsspaltenfläche (3a bis 3f) mit einem Kochgeschirr (18) mit der in Tiefenrichtung der Kochfeldplatte (2) in Verlängerung der Symboldarstellung (12) folgenden Belegungsspaltenfläche (3a bis 3f) korreliert ist.

2. Kochfeld (1) nach Anspruch 1, **gekennzeichnet durch** eine Steuereinheit (17), die dazu eingerichtet ist, abhängig von einer Erkennung zumindest eines Kochgeschirrs (18) auf der Kochzone (3) die der örtlich auf der Kochzone (3) und größenmäßig dem zumindest einem Kochgeschirr (18) entsprechende Teilfläche der Symboldarstellung (12) optisch durch Aktivierung der der Symboldarstellung (12) funktionell zugeordneten Beleuchtungsvorrichtung (14) anzuzeigen.

3. Kochfeld (1) nach einem der Ansprüche 1 oder 2, **gekennzeichnet durch** eine Steuereinheit (17), die dazu eingerichtet ist, nur diejenige Symboldarstellung (12) zur optischen Anzeige zu aktivieren, deren zugeordnete Belegungsspaltenflächen (3a bis 3f) im Vergleich zu anderen Belegungsspaltenflächen (3a bis 3f) mit dem größten Flächenteil eines Bodens eines Kochgeschirr (3) belegt ist.

4. Kochfeld (1) nach einem der vorhergehenden Ansprüche, **dadurch gekennzeichnet, dass** jede Symboldarstellung (12) durch eine Mehrzahl von geometrisch entsprechend der Fläche der Kochzone (3) angeordneten Lichtquellen (13) der zur Symboldarstellung (12) zugehörigen Beleuchtungsvorrichtung (14) aufgebaut ist.

5. Kochfeld (1) nach Anspruch 4, **dadurch gekennzeichnet, dass** die Lichtquellen (13) in einer Matrix, insbesondere einer zumindest 5x5-Matrix, angeordnet sind.

6. Kochfeld (1) nach einem der vorhergehenden Ansprüche, **dadurch gekennzeichnet, dass** sich das erste Anzeigefeld (5) über zumindest 80% der Breite der Kochzone (3) erstreckt.

7. Kochfeld (1) nach einem der vorhergehenden Ansprüche, **dadurch gekennzeichnet, dass** zumindest 4, insbesondere zumindest 5, Symboldarstellungen (12) in einer Reihe, insbesondere äquidistant, nebeneinander angeordnet sind.

8. Kochfeld (1) nach einem der vorhergehenden Ansprüche, **dadurch gekennzeichnet, dass** neben einer Symboldarstellung (12), insbesondere seitlich daran angrenzend, ein Wertanzeigefeld (15) für die Anzeige der Kochstufe ausgebildet ist.

9. Kochfeld (1) nach einem der vorhergehenden Ansprüche, **gekennzeichnet durch** eine Steuereinheit (17), die dazu eingerichtet ist, eine positionelle Veränderung eines Kochgeschirrs (18) auf der Kochzone (3) zu erfassen und abhängig von der Art der positionellen Änderung, insbesondere der Richtung der Positionsänderung, die Anzeige der Position von einer Symboldarstellung (12) auf eine andere Symboldarstellung (12) zu wechseln und/oder die Änderung der Position in einer einzigen Symboldarstellung (12) anzuzeigen.

10. Kochfeld (1) nach einem der vorhergehenden Ansprüche, **dadurch gekennzeichnet, dass** die Anzeigeeinheit (4) ein zweites Anzeigefeld (16) aufweist, welches zur Auswahl einer Kochstufe eines durch ein Kochgeschirr (18) belegten Kochzonenteilfläche ausgebildet ist.

11. Kochfeld (1) nach Anspruch 10, **dadurch gekennzeichnet, dass** das zweite Anzeigefeld (16) als Streifen parallel zum ersten Anzeigefeld (5) angeordnet ist und/oder das erste Anzeigefeld (5) in Tiefenrichtung der Kochfeldplatte (2) betrachtet zwischen dem zweiten Anzeigefeld (16) und der Kochzone (3) ausgebildet ist.

12. Kochfeld (1) nach einem der Anspruch 10 oder 11, **dadurch gekennzeichnet, dass** sich das zweite Anzeigefeld (16) mit einem kleinsten auswählbaren Kochstufenwert in Tiefenrichtung der Kochfeldplatte (2) betrachtet neben einer in der Reihe ersten Symboldarstellung (12) und/oder das zweite Anzeigefeld (16) mit einem größten auswählbaren Kochstufenwert in Tiefenrichtung betrachtet neben einer in der Reihe letzten Symboldarstellung (12) angeordnet ist.

13. Verfahren zum Betreiben eines Kochfelds (1), mit einer Kochfeldplatte (2), auf welcher zumindest eine flächenmäßig zusammenhängende Kochzone (3) ausgebildet wird, auf welcher Kochgeschirr (18) positionell variabel aufgestellt werden kann, wobei auf einer auf der Kochfeldplatte (2) ausgebildeten Anzeigeeinheit (4) Informationen über die Position des Kochgeschirrs (18) auf der Kochzone (3) angezeigt werden, wobei in einem ersten Anzeigefeld (5) der Anzeigeeinheit (4) eine Mehrzahl von separaten Anzeigebereichen (6 bis 11) ortsfest nebeneinander angeordnet wird, und in Anzeigebereichen (6 bis 11) jeweils eine verkleinerte Symboldarstellung (12) der gesamten Kochzone (3) angezeigt werden kann, **dadurch gekennzeichnet, dass** jede Symboldarstellung (12) durch jeweils eine Beleuchtungsvorrichtung (14) in zumindest mehreren flächig unterschiedlichen und/oder in der Flächengröße unterschiedlichen Teilflächen beleuchtet werden kann, und dass die Kochzone (3) in Belegungsspaltenflächen (3a bis 3f) aufgeteilt wird und jede Symboldarstellung (12) zur aktiven optischen Belegungsanzeige einer Belegungsspaltenfläche (3a bis 3f) mit einem Kochgeschirr (18) mit der in Tiefenrichtung der Kochfeldplatte (2) betrachtet in Verlängerung der Symboldarstellung (12) folgenden Belegungsspaltenfläche (3a bis 3f) korreliert wird und/oder eine positionelle Veränderung eines Kochgeschirrs (18) auf der Kochzone (3) erfasst wird und abhängig von der Art der positionellen Änderung, insbesondere der Richtung der Positionsänderung, die Anzeige der Position von einer Symboldarstellung (12) auf eine andere wechselt.

## Claims

1. Stove top (1) having a stove top plate (2) on which at least one area-connected cooking zone (3) is formed, an item of cookware being able to be placed thereon in variable positions, and a display unit (4) formed on the stove top plate (2) for displaying information about the position of the item of cookware (18) on the cooking zone (3), wherein the display unit (4) has a first display field (5) in which a plurality of separate display regions (6 to 11) are fixedly arranged adjacent to one another, and in each case a reduced symbol depiction (12) of the entire cooking zone (3) is displayed in the display regions (6 to 11), **characterised in that** each symbol depiction (12) is able to be illuminated by one respective lighting device (14) in at least a plurality of partial areas having different surfaces and/or different surface-areas, and that the cooking zone (3) is subdivided into occupied column areas (3a to 3f) and each symbol depiction (12) for the active optical display of an occupied column area (3a to 3f) with an item of cookware (18) is correlated with the following occupied column area (3a to 3f) in the depth direction of the stove top plate (2), in the longitudinal extension of the symbol depiction (12).

2. Stove top (1) according to claim 1, **characterised by** a control unit (17) which is configured, depending on an identification of at least one item of cookware (18) on the cooking zone (3), to display optically the partial area of the symbol depiction (12) corresponding to that located on the cooking zone (3) and in terms of size to the at least one item of cookware (18), by activating the lighting device (14) functionally assigned to the symbol depiction (12).

3. Stove top (1) according to one of claims 1 or 2, **characterised by** a control unit (17) which is configured to activate only the symbol depiction (12) for the optical display where the assigned occupied column areas (3a to 3f) thereof, in comparison with other occupied column areas (3a to 3f), are occupied by the largest part of the surface of a base of an item of cookware (3).

4. Stove top (1) according to one of the preceding claims, **characterised in that** each symbol depiction (12) is constructed from a plurality of light sources (13) of the lighting device (14) forming part of the symbol depiction (12), said light sources being arranged geometrically according to the surface of the cooking zone (3).

5. Stove top (1) according to claim 4, **characterised in that** the light sources (13) are arranged in a matrix, in particular in at least a 5 x 5 matrix.

6. Stove top (1) according to one of the preceding claims, **characterised in that** the first display field (5) extends over at least 80% of the width of the cooking zone (3).

7. Stove top (1) according to one of the preceding claims, **characterised in that** at least 4, in particular at least 5, symbol depictions (12) are arranged in a row, in particular equally spaced apart and adjacent to one another.

8. Stove stop (1) according to one of the preceding claims, **characterised in that** a value display field (15) is configured adjacent to a symbol depiction (12), in particular laterally adjacent thereto, for displaying the cooking phase.

9. Stove top (1) according to one of the preceding claims, **characterised by** a control unit (17) which is configured to detect an alteration to the position of an item of cookware (18) on the cooking zone (3) and, depending on the type of alteration to the position, in particular the direction of the alteration to the position, to change the display of the position from one symbol depiction (12) to another symbol depiction (12) and/or to display the alteration to the position in a single symbol depiction (12).

10. Stove top (1) according to one of the preceding claims, **characterised in that** the display unit (4) has a second display field (16) which is configured to select a cooking phase of a partial area of the cooking zone occupied by an item of cookware (18).

11. Stove top (1) according to claim 10, **characterised in that** the second display field (16) is arranged as a strip parallel to the first display field (5) and/or the first display field (5) is configured between the second display field (16) and the cooking zone (3), viewed in the depth direction of the stove top plate (2).

12. Stove top (1) according to one of claims 10 or 11, **characterised in that** the second display field (16) with the smallest selectable cooking phase value is arranged adjacent to the first symbol depiction (12) in the row, viewed in the depth direction of the stove top plate (2), and/or the second display field (16) with the largest selectable cooking phase value is arranged adjacent to the last symbol depiction (12) in the row, viewed in the depth direction.

13. Method for operating a stove top (1) having a stove top plate (2) on which at least one area-connected cooking zone (3) is configured, an item of cookware (18) being able to be placed thereon in variable positions, wherein information about the position of the item of cookware (18) on the cooking zone (3) is displayed on a display unit (4) configured on the stove top plate (2), wherein in a first display field (5) of the display unit (4) a plurality of separate display regions (6 to 11) are fixedly arranged adjacent to one another and in each case a reduced symbol depiction (12) of the entire cooking zone (3) may be displayed in display regions (6 to 11), **characterised in that** each symbol depiction (12) may be illuminated by one respective lighting device (14) in at least a plurality of partial areas having different surfaces and/or different surface-areas, and that the cooking zone (3) is subdivided into occupied column areas (3a to 3f) and each symbol depiction (12) for the active optical display of an occupied column area (3a to 3f) with an item of cookware (18) is correlated with the following occupied column area (3a to 3f) in the depth direction of the stove top plate (2), in the longitudinal extension of the symbol depiction (12) and/or an alteration to the position of an item of cookware (18) on the cooking zone (3) is detected and, depending on the type of alteration to the position, in particular the direction of the alteration to the position, the display of the position is changed from one symbol depiction (12) to another.

## Revendications

1. Table de cuisson (1) avec une plaque de table de cuisson (2), sur laquelle au moins une zone de cuisson continue en termes de surface (3), sur laquelle un ustensile de cuisine (18) peut être mis en place de manière variable en termes de position, et avec une unité d'affichage (4) réalisée sur la plaque de table de cuisson (2) pour l'affichage d'informations relatives à la position de l'ustensile de cuisine (18) sur la zone de cuisson (3), dans laquelle l'unité d'affichage (4) présente un premier panneau d'affichage (5), dans lequel une pluralité de zones d'affichage séparées (6 à 11) sont disposées de manière fixe les unes à côté des autres, et dans les zones d'affichage (6 à 11) respectivement une représentation de symbole réduite (12) de la zone de cuisson totale (3) est affichée, **caractérisée en ce que** chaque représentation de symbole (12) peut être éclairée respectivement par le biais d'un dispositif d'éclairage (14) dans au moins plusieurs parties de surface différentes en termes de surface et/ou différentes en termes de taille de surface, et **en ce que** la zone de cuisson (3) est divisée en surfaces de fentes de recouvrement (3a à 3f) et chaque représentation de symbole (12) est corrélée pour un affichage de recouvrement optique actif d'une surface de fente de recouvrement (3a à 3f) avec un ustensile de cuisine (18) avec la surface de fente de recouvrement (3a à 3f) qui suit dans la direction de la profondeur de la plaque de table de cuisson (2) dans le prolongement de la représentation de symbole (12).

2. Table de cuisson (1) selon la revendication 1, **caractérisée par** une unité de commande (17) qui est conçue pour afficher optiquement en fonction d'une reconnaissance d'au moins un ustensile de cuisine (18) sur la zone de cuisson (3) la partie de surface de la représentation de symbole (12) qui correspond localement sur la zone de cuisson (3) et en termes de taille à l'au moins un ustensile de cuisine (18) par le biais de l'activation du dispositif d'éclairage (14) associé de manière fonctionnelle à la représentation de symbole (12).

3. Table de cuisson (1) selon l'une des revendications 1 ou 2, **caractérisée par** une unité de commande (17) qui est conçue pour n'activer que la représentation de symbole (12) pour un affichage optique dont la surface de fentes de recouvrement (3a à 3f) associée est recouverte en comparaison avec d'autres surfaces de fentes de recouvrement (3a à 3f) avec la plus grande partie de surface d'une partie inférieure d'un ustensile de cuisine (3).

4. Table de cuisson (1) selon l'une des revendications précédentes, **caractérisée en ce que** chaque représentation de symbole (12) est constituée par le biais d'une pluralité de sources de lumière (13), disposées géométriquement en correspondance avec la surface de la zone de cuisson (3), du dispositif d'éclairage (14) appartenant à la représentation de symbole (12).

5. Table de cuisson (1) selon la revendication 4, **caractérisée en ce que** les sources de lumière (13) sont disposées dans une matrice, en particulier au moins une matrice 5 x 5.

6. Table de cuisson (1) selon l'une des revendications précédentes, **caractérisée en ce que** le premier panneau d'affichage (5) s'étend sur au moins 80 % de la largeur de la zone de cuisson (3).

7. Table de cuisson (1) selon l'une des revendications précédentes, **caractérisée en ce qu'**au moins 4, en particulier au moins 5, représentations de symbole (12) sont disposées les unes à côté des autres sur une rangée, en particulier de manière équidistante.

8. Table de cuisson (1) selon l'une des revendications précédentes, **caractérisée en ce que**, à côté d'une représentation de symbole (12), en particulier de manière latéralement adjacente à celle-ci, un panneau d'affichage de valeurs (15) est réalisé pour l'affichage de l'étape de cuisson.

9. Table de cuisson (1) selon l'une des revendications précédentes, **caractérisée par** une unité de commande (17) qui est conçue pour acquérir une modification de position d'un ustensile de cuisine (18) sur la zone de cuisson (3) et pour changer en fonction du type de modification de position, en particulier la direction de la modification de position, l'affichage de la position d'une représentation de symbole (12) à une autre représentation de symbole (12) et/ou pour afficher la modification de la position dans une représentation de symbole (12) unique.

10. Table de cuisson (1) selon l'une des revendications précédentes, **caractérisée en ce que** l'unité d'affichage (4) présente un deuxième panneau d'affichage (16), lequel est réalisé pour la sélection d'une étape de cuisson d'une partie de surface de zone de cuisson recouverte par le biais d'un ustensile de cuisine (18).

11. Table de cuisson (1) selon la revendication 10, **caractérisée en ce que** le deuxième panneau d'affichage (16) est disposé en tant que bandes parallèlement au premier panneau d'affichage (5) et/ou le premier panneau d'affichage (5), en regardant dans la direction de la profondeur de la plaque de table de cuisson (2), est réalisé entre le deuxième panneau d'affichage (16) et la zone de cuisson (3).

12. Table de cuisson (1) selon l'une des revendications 10 ou 11, **caractérisée en ce que** le deuxième panneau d'affichage (16), avec la plus petite valeur d'étape de cuisson sélectionnable en regardant dans la direction de la profondeur de la plaque de table de cuisson (2) à côté d'une première représentation de symbole (12) dans la rangée et/ou de deuxième panneau d'affichage (16) avec la plus grande valeur d'étape de cuisson sélectionnable en regardant dans la direction de la profondeur sont disposés à côté d'une dernière représentation de symbole (12) dans la rangée.

13. Procédé pour le fonctionnement d'une table de cuisson (1), avec une plaque de table de cuisson (2), sur laquelle au moins une zone de cuisson continue en termes de surface (3) est réalisée, sur laquelle un ustensile de cuisine (18) peut être mis en place de manière variable en termes de position, dans lequel sur une unité d'affichage (4) réalisée sur la plaque de table de cuisson (2) des informations relatives à la position de l'ustensile de cuisine (18) sur la zone de cuisson (3) sont affichées, dans lequel dans un premier panneau d'affichage (5) de l'unité d'affichage (4) une pluralité de zones d'affichage séparées (6 à 11) sont disposées de manière fixe les unes à côté des autres, et dans les zones d'affichage (6 à 11) respectivement une représentation de symbole réduite (12) de la zone de cuisson totale (3) peut être affichée, **caractérisé en ce que** chaque représentation de symbole (12) peut être éclairée par le biais respectivement d'un dispositif d'éclairage (14) dans au moins plusieurs parties de surface différentes en termes de surface et/ou différentes en termes de taille de surface, et **en ce que** la zone de cuisson (3) est divisée en surfaces de fentes de recouvrement (3a à 3f) et chaque représentation de symbole (12) est corrélée pour un affichage de recouvrement optique actif d'une surface de fente de recouvrement (3a à 3f) avec un ustensile de cuisine (18) avec la surface de fente de recouvrement (3a à 3f) qui suit dans le prolongement de la représentation de symbole (12) en regardant dans la direction de la profondeur de la plaque de table de cuisson (2) et/ou une modification de position d'un ustensile de cuisine (18) est acquise sur la zone de cuisson (3) et en fonction du type de modification de position, en particulier la direction de la modification de position, l'affichage de la position d'une représentation de symbole (12) est changé pour passer à une autre.
